# EUROPEAN PATENT SPECIFICATION

(11) **EP 3 729 008 B1**
(45) Date of publication and mention of the grant of the patent: **10.04.2024**
(21) Application number: 18830133.7
(22) Date of filing: 20.12.2018
(51) Int. Cl.: G01F 1/66, G01F 15/14

(54) **FLOW METER COMPRISING A FLOW METER CUP WITH ELECTRICAL FEEDTHROUGH**
DURCHFLUSSMESSER MIT EINEM DURCHFLUSSMESSERBECHER MIT ELEKTRISCHER DURCHFÜHRUNG
DÉBITMÈTRE COMPRENANT UNE COUPELLE DE DÉBITMÈTRE AVEC UNE TRAVERSÉE ÉLECTRIQUE

(30) Priority: 20.12.2017 WO PCT/DK2017/050447
(43) Date of publication of application: 28.10.2020
(73) Proprietor: Apator Miitors ApS, 8210 Aarhus V (DK)
(72) Inventor: DRACHMANN, Jens, 8260 Viby J (DK); PRICE, James Edward, 8240 Risskov (DK)
(74) Representative: Patentgruppen A/S
(86) International application number: PCT/DK2018/050415
(87) International publication number: WO 2019/120456

(56) References cited:
- EP-A1- 2 236 998
- WO-A1-2017/186248
- US-A1- 2015 276 454
- US-A1- 2015 308 870
- US-A1- 2016 252 379
- US-A1- 2016 381 822

## Description

### FIELD OF INVENTION

The invention relates to a flow meter comprising a flow meter housing comprising a flow meter cup with an electrical feedthrough.

### BACKGROUND

Modern consumption meters for measuring a consumed amount of a utility such a water, heating, cooling or gas are compact devices managing tasks of operation such as flow measurement, consumption calculation, and communication thereof.

One type of consumption meter is an ultrasonic consumption meter based on the principle of difference of time-of-flight between oppositely propagating ultrasonic signals, which allows the determination of the mean flow velocity of the utility fluid. Piezoelectric transducers emitting and receiving such ultrasonic signals are arranged in a waterproof housing to protect them against humidity, such as from the utility fluid itself or from the surroundings. Electronics controlling the transducers as well as electronics calculating the consumption may be arranged inside or outside the housing. Likewise, communication modules, such as radio communication modules, transmitting information relating to the consumption from the consumption meter to the utility provider, may be arranged inside or outside the housing.

Thus, electrically connecting elements such as electronics or modules inside the housing and external elements require waterproof electrical feedthroughs to protect the elements in the housing against humidity.

Published internationally patent application WO 2014/079460 A1 to Kamstrup A/S of

Denmark (also published as US Patent document US 2015/276454 A1) discloses a consumption meter with a conductive feedthrough for external communication equipment, said feedthrough comprising a two-sections conductive path from a communication module arranged inside a housing via a housing opening to an outside part subject to ambient conditions, one section of the path being comprised on an inner surface of the housing or on an inner surface of a cover and being sealed at the opening of the housing. Such feedthrough is rather complex, and there is a need for alternative feedthroughs.

### SUMMARY

It is therefore an object of the present invention to provide a flow meter with a flow meter cup with an electrical feedthrough which is simpler than existing feedthroughs.

Accordingly, the invention relates to a flow meter arranged to measure a flow rate of a fluid flowing through a flow tube, wherein the flow meter comprises:
- the flow tube, and
- an ultrasonic flow meter housing,

the flow meter housing comprising:
   - a flow meter cup, and
   - a lid,
the flow meter cup comprising:
   - a first cup section comprising:
   - a first cup cavity arranged for accommodating:
   - two ultrasonic transducers for emitting and receiving ultrasonic signals, and
   - an electronic circuit for operating the transducers, and
   - a second cup section, and
an opening,
wherein the ultrasonic flow meter housing is mounted onto the flow tube so as to allow ultrasonic signals from said transducers to pass across the fluid flowing through the flow tube,
wherein the second cup section comprises a hermetically sealed electrical feedthrough, wherein the hermetically sealed electrical feedthrough is a metallic feedthrough,
wherein the first cup section comprises a first cup structure comprising the first cup cavity and a first cup opening, and the second cup section comprises a second cup structure which is arranged in the first cup opening, so as to provide a first closed connection between the first cup structure and the second cup structure, wherein a first sealing means hermetically seals the first closed connection,
wherein the lid is arranged in the opening of the first cup structure, so as to provide a closed connection between the first cup structure and the lid, and wherein a sealing means hermetically seals the closed connection.

Thus, according to the invention a flow meter comprising a flow meter cup is provided with two sections: One section comprising a first cup cavity for ultrasonic transducers and electronics therefor, and another section comprising a hermetically sealed electrical feedthrough.

In the context of the present invention a flow meter cup should be understood as an open container for carrying elements of a flow meter, such as the ultrasonic transducers and the electronics therefor. A flow meter is understood as a device for measuring fluid flow.

Also in the context of the present invention the flow meter cup comprises two sections, i.e. two structural parts of the cup body. Thus, with the invention, one part of the cup body is dedicated to forming a cavity for the transducers and the electronics, whereas another part of the cup body is dedicated for comprising a hermetically sealed electrical feedthrough, such as across a body wall of the flow meter cup.

Further in the context of the present invention a hermetically sealed electrical feedthrough is an electrically conductive feedthrough across a barrier, such as a metallic pin arranged to extend across a body wall of the flow meter cup, i.e. extending from the inside to the outside of the flow meter cup and wherein the body of the electrically conductive feedthrough per se is waterproof, and wherein the electrically conductive feedthrough is further sealed against the barrier so as to provide a waterproof interface between the body of the electrically conductive feedthrough and the barrier.

In the context of the present invention it should understood that if the hermetically sealed electrical feedthrough comprises a plurality of electrical pins, such pins are electrically insulated from each other.

The hermetically sealed electrical feedthrough of the present invention provides a protection against dust and water which is rated IP65, IP66, IP67 or even IP68 according to the International Protection Marking, IEC standard 60529, such as that ingress of water shall not be possible in a harmful quantity when the enclosure with the barrier is immersed e.g. 1000 mm below the surface of water for e.g. 30 minutes. Also, the hermetically sealed electrical feedthrough shall, in the context of the present invention, be understood is an electrical feedthrough through a barrier which has no more ingress of water than across the bulk phase of the barrier.

The flow meter cup with the hermetically sealed electrical feedthrough for the flow meter of the present invention allows for a simple and easy-to-produce electrical feedthrough across the body wall of the flow meter cup. The hermetically sealed electrical feedthrough of the flow meter cup thus allows for electrical connection between elements inside the flow meter cup and element outside the flow meter cup, while not compromising the water tightness of the flow meter cup.

According to the invention the hermetically sealed electrical feedthrough is a metallic feedthrough.

Metallic feedthroughs offer the advantage of high electrical conductivity.

In a further preferred embodiment, the metallic electrical feedthrough is made from pure metals such as copper, or alloys such as copper alloys, such as beryllium-copper alloys or nickel silver, also known as German silver.

Such metallic feedthroughs may preferably be flat or round.

Alternatively, the hermetically sealed electrical feedthrough may be made from a conductive polymer.

In another embodiment of the invention the hermetically sealed electrical feedthrough is a flexible feedthrough.

Being flexible, the electrical feedthrough provides mechanical flexibility to an electrical connection between an inner element of the flow meter cup and an outer element.

Whereas in one embodiment of the invention flexible connectors such as flexible cables may be used to connect an inner element such as a communication module to an inner terminal of the electrical feedthrough and/or to connect an outer element such as an external antenna to an outer terminal of the electrical feedthrough and thus provide mechanical flexibility between the inner and outer elements, such flexibility may be as well be provided by the electrical feedthrough being flexible per se. In such case elements with no mechanical flexibility may be connected directly to the flexible electrical feedthrough and still obtain mechanical flexibility between the elements. Such flexibility allows for ease of assembly with larger tolerances, as well as for mechanical robustness during operation.

In one embodiment of the invention the hermetically sealed electrical feedthrough is applied to the second cup section by insert molding.

Applying the electrical feedthrough to the second cup section by insert molding comprises that the electrical feedthrough is applied to the second section of the flow meter cup during a step of molding of the second section, so that during this step the electrical feedthrough is incorporated into this cup section while this is molded.

The process of molding is typically an injection molding process as known in the art. During such injection molding process the electrically feedthrough, typically in terms of one or more metallic pins, is arranged within the mold in a predetermined position, and the cup section is molded around the feedthrough to incorporate it with the cup section and to provide an intimate contact between the feedthrough and the cup section.

According to this embodiment of the invention, the interface between the second cup section and the electrical feedthrough is free of sealants and gaskets.

Also, according to this embodiment, the second cup section with the feedthrough is provided in a one-step process for ease of production.

Further with this embodiment of the invention the surface of the electrical feedthrough may be mechanically roughened to further improve the bonding between the second cup section and the electrical feedthrough, i.e. to obtain a more effectively sealed interface and in turn a more long-lasting seal.

Further, alternatively or additionally, the surface of the electrical feedthrough may be chemically etched. Chemical etching of the surface of the electrical feedthrough has similar advantages in terms of interface sealing and long-lasting seal as have mechanical roughening.

Further, alternatively or additionally, the surface of the electrical feedthrough may be plasma etched. Plasma etching of the surface of the electrical feedthrough has similar advantages in terms of interface sealing and long-lasting seal as have mechanical roughening and chemical etching.

Further, alternatively or additionally, the surface of the electrical feedthrough may be chemically modified. Chemical modification may comprise applying polymer chains, such as chains of poly(methyl methacrylate) or poly(hydroxyethyl methacrylate) to a surface of a metallic electrical feedthrough, the surface preferably being primed prior to such application, such as being electrochemically primed with a benzenediazonium salt.

Chemical modification of the surface of the electrical feedthrough has similar advantages in terms of interface sealing and long-lasting seal as have mechanical roughening.

Thus, in a preferred embodiment of the invention a flow meter comprising a flow meter cup is provided, wherein the surface of the metallic feedthrough is chemically modified, preferably by applying polymer chains thereto.

Examples of chemically modified surfaces by means of polymer chain application are described in European patent EP 2 920 230 B1.

In other alternative embodiments of the invention, where the surface of the electrical feedthrough is pretreated, this may be done by laser ablation or electrical discharge machining, or by mechanical means such as sand blasting or sand paper treatment. Also with this embodiment of the invention and to properly position the electrical feedthrough within the mold, and in turn with the eventually molded second cup section, the electrical feedthrough may be combined with, i.e. mechanically connected to, one or more lead frames, which extend beyond the body of the second cup section and which are removed after the molding step. In particular with a plurality of metallic pins being inserted with the second cup section, lead frames allow for precise relative positioning of the plurality of metallic pins with the second cup section.

In another embodiment of the invention the hermetically sealed electrical feedthrough is applied to the second cup section by ultrasound insertion.

Ultrasound insertion of the electrical feedthrough with the second cup section allows for post molding insertion of the electrical feedthrough and ease of manufacture.

With ultrasound insertion of the hermetically sealed electrical feedthrough, the second cup section is preferably provided with preformed holes for insertion of the electrical feedthrough. Ultrasound insertion is then done by applying ultrasonic energy to the feedthrough, preferably by means of an appropriate ultrasonic horn, while inserting it into the hole, optionally by implying a small mechanical force onto the feedthrough as well.

Similar pretreatment processes as with the above embodiment of insert molding may be applied with the ultrasound insertion embodiment.

In an alternative embodiment of the invention the hermetically sealed electrical feedthrough is applied to the second cup section by hammering, i.e. mechanically hammering the electrical feedthrough into the second cup section by applying mechanical force onto the feedthrough. As above, with this embodiment of the invention the second cup section is preferably provided with preformed holes for insertion of the feedthrough.

According to the invention the first cup section comprises a first cup structure comprising the first cup cavity and a first cup opening, and the second cup section comprises a second cup structure which is arranged in the first cup opening, so as to provide a first closed connection between the first cup structure and the second cup structure, and wherein a first sealing means hermetically seals the first closed connection.

Thus, the flow meter cup comprises two separate structures, the first structure making up the first cup section and holding the first cup cavity, the second structure making up the second cup section. Further, the first cup structure has a first cup opening and the second cup structure is arranged with this first cup opening to make up a first closed connection between the two cup structures.

Additionally, a first sealing means is applied to hermetically seal said first closed connection.

In the context of the invention it should be understood that such hermitical seal of the first closed connection has similar definition in terms of water ingress as has the hermetically sealed electrical feedthrough.

Providing the flow meter cup from two separate structures allows for improved freedom of design and manufacture, such as over providing the flow meter cup from e.g. a single structure. Thus, one advantage with the two structures version is that it allows for complex designs with the assembled flow meter cup, such as designs with one or more undercuts, which may otherwise not be obtainable.

Further, the second cup structure is arranged with the first cup opening of first cup structure, and the so-established closed connection is hermetically sealed. Thus, when arranged and sealed, the first and second cup structures make up a combined structure as if they were prepared from one structure only, the hermetically seal between the structures being as resistant to water ingress as the bulk phase of the flow meter cup per se.

In a preferred embodiment of the invention the first sealing means comprises ultrasonic welding.

Thus with this embodiment the second cup structure, once arranged in the first cup opening of the first cup structure, is ultrasonically welded to the first cup structure. Preferably such welding is done by applying ultrasonic energy by means of an ultrasonic horn onto the entire interphase between the first and second cup structures, and thus welding the two structures together to provide a hermetical seal.

In an alternative embodiment of the invention the first sealing means comprises an O-ring, such as a nitrile rubber O-ring.

According to a preferred embodiment both of the first and second cup structures are made from polyphenylene sulfide (PPS). PPS has excellent ultrasonic welding properties.

According to another preferred embodiment of the invention the first cup structure further comprises a second cup cavity adjacent to the first cup opening, and a second cup opening, wherein the second cup structure forms a shared wall between the first cup cavity and the second cup cavity, and wherein the second cup cavity is arranged for receiving a first electrical connector through the second cup opening.

With this embodiment of the invention the first cup structure comprises a second cup cavity beyond the first cup cavity, the second cup cavity being arranged adjacent to the first cup opening. Thus, with this embodiment, the first cup opening connects the first cup cavity and the second cup cavity, i.e. the first cup structure has two individual cavities or compartments, the first opening therebetween combining the two cavities like a doorway connecting two rooms. It should be understood, however, that the second cup structure is arranged with the first cup opening to form a shared wall between the first cup cavity and the second cup cavity, thus closing the connection between the two cup cavities.

Also with this embodiment the flow meter cup has a second cup opening beyond the first cup opening. The second cup cavity is thus arranged to receive a first electrical connector through the second opening, such as an electrical cable from the outside, extending through the second opening to be received in the second cup cavity. The so receiving facility of the second cavity with its second opening provides a space for connecting such electrical cable from the outside to e.g. the electrical feedthrough.

In a preferred embodiment of the invention the flow meter cup further comprises a third cup structure arranged in the second cup opening of the first cup structure, so as to provide a second closed connection between the first cup structure and the third cup structure.

With this embodiment a further cup structure, i.e. the third cup structure, is arranged in the second cup opening so as to close this opening by establishing a closed connection to the first cup structure. Thus, by means of the second cup structure closing the first cup opening and the third cup structure closing the second cup opening, with this embodiment the second cavity is a closed cavity.

In the context of this embodiment is should be understood that the second closed connection may or may not be a hermetically sealed connection, in contrast to the first closed connection, which is hermetically sealed. In case the second closed connection is hermetically sealed, the second cup cavity is hermetically sealed as well. Alternatively, the second cup cavity is not hermetically sealed in case the second closed connection is not. A hermetically sealed second cup cavity may be used for accommodation of delicate electronics of the flow meter. A non-sealed second cup cavity may be used for accommodation of less delicate elements of the flow meter, however, not for delicate electronics.

In an embodiment of the invention the third cup structure is arranged to accommodate a second electrical connector arranged for receiving the first electrical connector and for connecting to the hermetically sealed electrical feedthrough.

Thus, the second electrical connector in the third cup structure has a two-fold purpose: To receive and electrically connect to the first electrical connector from the outside, and to further electrically connect to the hermetically sealed electrical feedthrough, so as to provide an electrical connection from the first electrical connector via the second electrical connector to the hermetically sealed electrical feedthrough.

For receiving the first electrical connector, the third cup structure may have one or more holes for accommodating the first electrical connector, such as for accommodating one or more electrical cables.

According to a preferred embodiment of the invention the third cup structure is alternatively or additionally arranged to accommodate retention means for retaining the first electrical connector in the second cup cavity.

Beyond connecting the first electrical connector to the hermetically sealed electrical feedthrough, the third cup structure may thus provide an additional functionality: To retain the first electrical connector in the second cup cavity. Thus, in order to prevent the first electrical connector from being disconnected from the second electrical connector, and in turn from the hermetically sealed electrical feedthrough, the first electrical connector is connected to a retention means of the third cup structure, to take up any strain with the first electrical connector.

In a preferred embodiment of the invention the retention means comprises a printed circuit board.

Being connected to a printed circuit board, which in turn is arranged and mechanically fixed within the first cup structure, any strain from the electrical connector is accommodated in the printed circuit board and not with the electrical feedthrough, thereby minimizing the risk of disconnection.

Also the printed circuit board may constitute the second electrical connector.

Preferably the third cup structure is made from polyphenylene sulfide, well suited for ultrasonic welding.

A flow meter cup for the flow meter may be manufactured by a method , where the flow meter cup comprises a first cup section with a first cup cavity arranged for accommodating two ultrasonic transducers for emitting and receiving ultrasonic signals, and an electronic circuit for operating the transducers, and a second cup section is provided, the method comprising the step of molding the first and second cup sections, the step of molding the first and second cup sections includes molding a hermetically sealed electrical feedthrough into the second cup section by insert molding.

Thus, in the above method, the first and second cup sections are molded, typically injection molded, and during which molding step the hermetically sealed electrical feedthrough is inserted with the second cup section by insert molding as described above.

Such method has the advantage of being a one-step process for ease of manufacture, further allowing a fast application and precise positioning of the hermetically sealed electrical feedthrough with the second cup structure.

Alternatively, the first cup section and the second cup section may be molded in two, separate steps.

A flow meter cup for the flow meter may be manufactured by a method of manufacture, where the flow meter cup comprises a first cup section with a first cup cavity arranged for accommodating two ultrasonic transducers for emitting and receiving ultrasonic signals, and an electronic circuit for operating the transducers, and a second cup section is provided, the method comprising the steps of molding the first and second cup sections, and ultrasonically welding a hermetically sealed electrical feedthrough into the second cup section.

Thus, in the above method the first and second cup sections are molded, typically injection molded in one or more steps, and wherein, in a subsequent step, the hermetically sealed electrical feedthrough is inserted with the second cup section as described above.

Such method allows for ease of manufacture in terms of post molding insertion of the electrical feedthrough.

Within the context of the above disclosed methods it may be preferred that the first cup section comprises a first cup structure comprising the first cup cavity, and further comprises a first cup opening, and the second cup section comprises a second cup structure, the method further comprises the steps of arranging the second cup structure in the first cup opening so as to provide a first closed connection between the first cup structure and the second cup structure, and hermetically sealing the first closed connection by a first sealing means.

Providing a method wherein the flow meter cup is manufactured from two separate structures allows for improved freedom of design and manufacture, such as over providing the flow meter cup from e.g. a single structure. Thus, one advantage with this method is that it allows for more complex designs with the assembled flow meter cup, such as designs with one or more undercuts, which may otherwise not be obtainable.

Within the context of the above disclosed methods it may be preferred that the first sealing means comprises ultrasonic welding. Ultrasonic welding allows for ease of manufacture.

A flow meter cup for the flow meter may be manufactured by a method of manufacture where the flow meter cup comprises a first cup structure comprising a first cup cavity arranged for accommodating two ultrasonic transducers for emitting and receiving ultrasonic signals, and an electronic circuit for operating the transducers is provided, the method comprising the step of molding the first cup structure, wherein the step of molding the first cup structure includes molding a hermetically sealed electrical feedthrough into a wall of the first cup structure by insert molding.

Applying the hermetically sealed electrical feedthrough by insert molding during a molding process allows for a simple, one-step process of manufacture of the flow meter cup.

A flow meter cup for the flow meter may be manufactured by a method of manufacture, where the flow meter cup comprises a first cup structure comprising a first cup cavity arranged for accommodating two ultrasonic transducers for emitting and receiving ultrasonic signals, and an electronic circuit for operating the transducers is provided, the method comprising the steps of molding the first cup structure, and ultrasonically welding a hermetically sealed electrical feedthrough into a wall of the first cup structure.

Applying the hermetically sealed electrical feedthrough by ultrasonic welding allows for ease of manufacture in terms of post molding insertion of the electrical feedthrough.

Also disclosed is a flow meter housing for use in the flow meter of the invention, the flow meter housing comprising the flow meter cup as described herein and further comprising an additional opening, and a lid, wherein the lid is arranged in the additional opening of the first cup structure, so as to provide an additional closed connection between the first cup structure and the lid, and wherein an additional sealing means hermetically seals the additional closed connection.

Such flow meter housing is hermetically sealed to accommodate delicate, sensitive electronics.

In a preferred embodiment of the invention the flow meter is a water meter, a heat meter, or a cooling meter.

In another preferred embodiment of the invention, the flow meter is a heat meter, or a cooling meter, wherein the hermetically sealed electrical feedthrough is arranged to carry electrical signals relating to the temperature of the fluid.

### FIGURES

Below the invention will be described with reference to the figures in which:
Figure 1 shows a schematic of a flow meter cup for the flow meter according to the invention,
Figure 2 shows a schematic of an embodiment of the flow meter cup for the flow meter according to the invention,
Figure 3 shows a schematic of another embodiment of the flow meter cup for the flow meter according to the invention,
Figure 4 shows a schematic of yet another embodiment of the flow meter cup for the flow meter according to the invention,
Figure 5 shows a schematic of a flow meter housing for the flow meter according to the invention,
Figure 6 shows a schematic of a flow meter according to the invention, and
Figures 7 and 8 show exploded views in two different perspectives of the flow meter according to the invention, comprising a flow meter housing, in turn comprising a flow meter cup.

### DETAILED DESCRIPTION

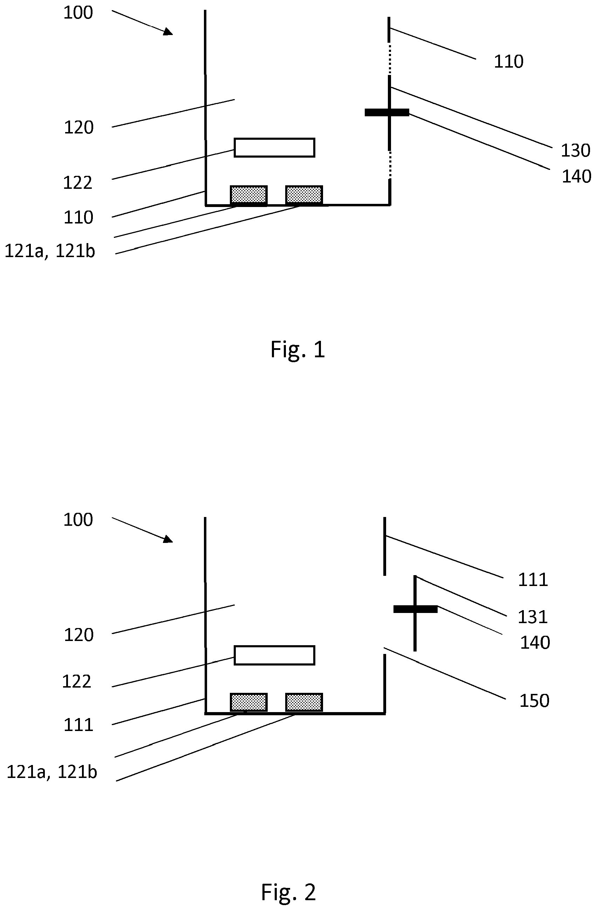

Referring to Figure 1, a schematic of a flow meter cup 100 for the flow meter 400 (not shown) according to the invention is shown.

The flow meter cup 100 comprises a first cup section 110 and a second cup section 130.

The first cup section 110 comprises a first cup cavity 120 accommodating two ultrasonic transducers 121a, 121b, and an electronic circuit 122 for operating the transducers 121.

The second cup section 130 comprises a hermetically sealed electrical feedthrough 140.

With Figure 1 the interface between first cup section 110 and second cup section 130 is indicated with dotted lines.

The hermetically sealed electrically feedthrough 140 comprises two metallic pins (not shown), made from German silver. The thickness of the pins is 0.2 mm to provide mechanical flexibility to the pins.

The first cup section 110 and the second cup section 130 are made from polyphenylene sulfide (PPS) by injection molding as a single structure, during which molding step the hermetically sealed electrical feedthrough in terms of two individual pins are arranged in the mold to be inserted into the body of the second cup section 130 by an insert molding process.

To properly align the two individual pins of the hermetically sealed electrical feedthrough 140, two lead frames are applied to the end of the pins, one lead frame on the end of the pins which eventually appear on the inside of the flow meter cup, and another lead frame on the opposite end of the pins. Both lead frames are removed from the pins subsequent to the molding step.

With reference to Figure 2, a schematic of an embodiment of the flow meter cup 100 for the flow meter 400 (not shown) according to the invention is shown.

The flow meter cup 100 comprises a first cup structure 111 and a second cup structure 131, corresponding to the first cup section 110 and second cup section 130, respectively, as two separate structures.

The first cup structure 111, made from PPS by injection molding, comprises the first cup cavity 120 accommodating the two ultrasonic transducers 121a, 121b and the electronic circuit 122 for operating the transducers 121a, 121b.

The second cup structure 131, made from PPS, comprises the hermetically sealed electrical feedthrough 140, inserted by insert molding as above during an injection molding step of the second cup structure 131.

The first structure 111 has a first cup opening 150, in which opening 150 the second cup structure 131 is arranged to form a closed connection, which connection is ultimately ultrasonically welded to form a hermetically sealed closed connection.

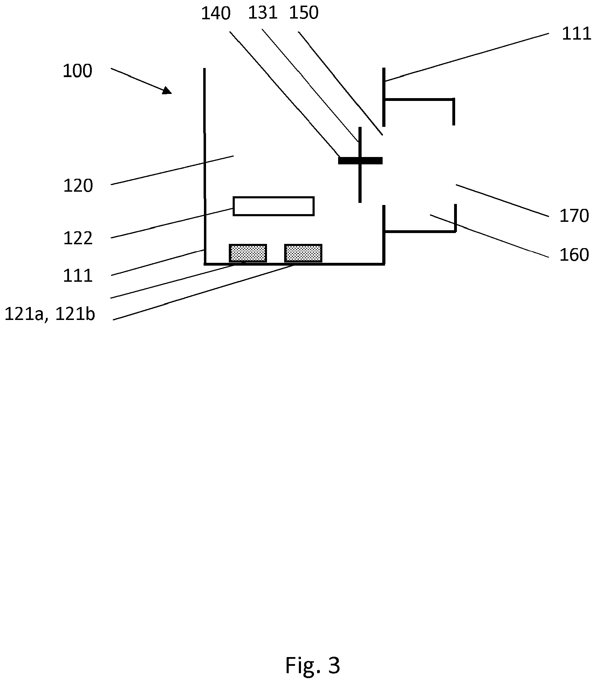

With reference to Figure 3, a schematic of another embodiment of the flow meter cup 100 for the flow meter 400 (not shown) according to the invention is shown.

With this embodiment flow meter cup 100 comprises, in addition to the above elements, a second cup cavity 160 and a second cup opening 170 to make up the first cup structure 111.

The second cup structure 131 forms a shared wall between the first cup cavity 120 and the second cup cavity 160.

The second cup cavity 160 is arranged for receiving a first electrical connector, such as an electrical cable carrying electrical signal relating to a temperature, such as a fluid temperature, across the second cup opening 170.

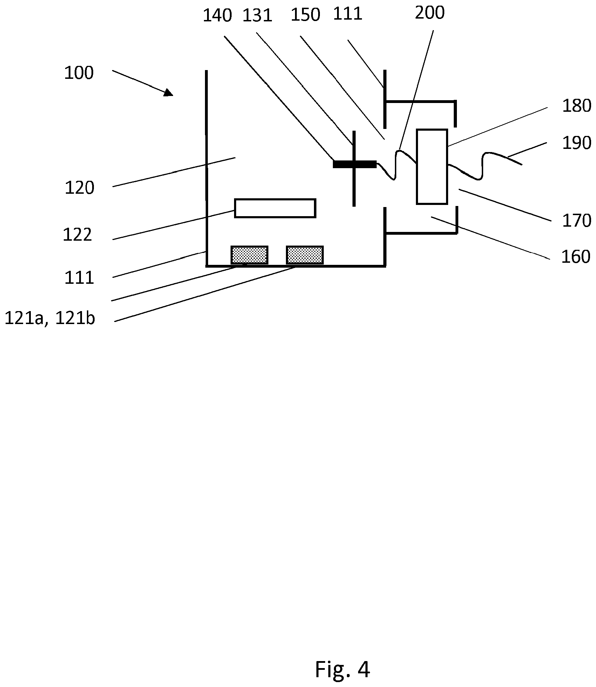

With reference to Figure 4, a schematic of yet another embodiment of the flow meter cup 100 for the flow meter 400 (not shown) according to the invention is shown.

With this embodiment flow meter cup 100 comprises, in addition to the above element, a third cup structure 180 arranged in the second cup opening 170 to provide a second closed connection between the first cup structure 111 and the third cup structure 180.

The third cup structure 180 further comprises a second electrical connector 200 for connecting to the hermetically sealed electrical feedthrough 140, thus ultimately connecting the first electrical connector 190 to the hermetically sealed electrical feedthrough 140 via the third cup structure 180 with its second electrical connector 200.

The third cup structure 180 comprises a printed circuit board, which is fixed to the first cup structure 111 and which makes up a retention means for the first electrical connector 190.

Whereas the third cup structure 180 is arranged the in the second cup opening 170, there providing a second closed connection, according to the invention this connection is not hermetically sealed. None of the first electrical connector 190, the third cup structure 180 and the second electrical connector 200 make up delicate electronics, and the second cup cavity 160 therefore needs not be hermetically sealed. Instead, for ease of manufacture and saving of manufacture cost, second cup cavity is a closed compartment, protected against water ingress only to lower level ratings, such as according to IP22 or similar according to the International Protection Marking, IEC standard 60529.

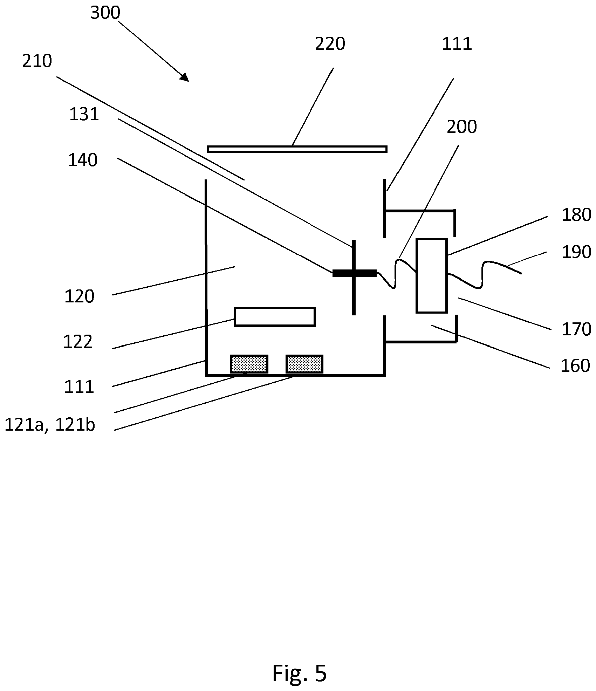

With reference to Figure 5, a schematic of a flow meter housing 300 for the flow meter 400 (not shown) according to invention is shown.

Flow meter housing 300 comprises flow meter cup 100, which in addition to the above elements comprises an additional opening 210.

Flow meter housing 300 further comprises lid 220 made from glass as known in the art for arrangement with the additional opening 210 to provide an additional closed connection between the first cup structure 111 and the lid 220. The additional closed connection is hermetically sealed by an additional sealing means, such as an O-ring, such as a nitrile rubber O-ring, to provide a hermetically sealed first cavity 120 for accommodation of delicate electronics.

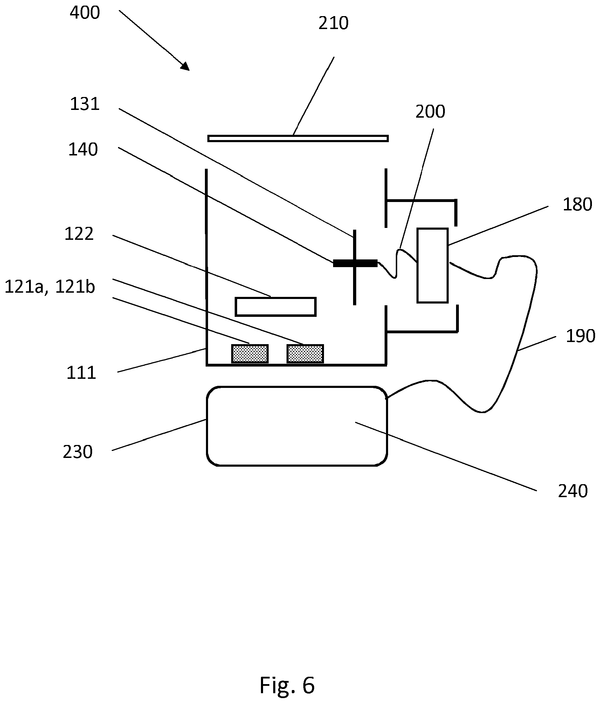

With reference to Figure 6, a schematic of the flow meter 400 according to the invention is shown.

Flow meter 400 comprises flow meter housing 300, and in addition hereto, flow tube 230 for the fluid 240 to be measured.

With the flow meter 400, the flow meter housing 300 is mounted onto the flow tube 230 to allow the ultrasonic signals from one of transducers 121a to pass across the fluid 240 flowing through the flow tube 230 to the other transducer 121b and vice versa. Oppositely propagating ultrasonic signal are used to determine the fluid flow rate.

Also with the flow meter 400 first electronic connection 190 is made up by one or more temperature sensitive connections, such as thermocouples, such as PT500 thermocouples, to measure temperatures of the fluid, such as of the inflowing and outflowing fluid, which in turn may be used for calculation of the consumed utility such as heating and cooling according to the state of the art.

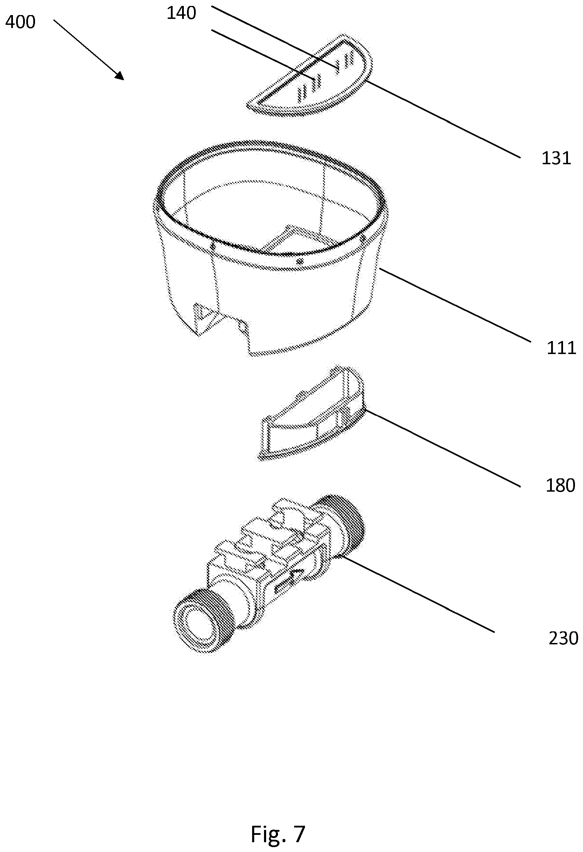

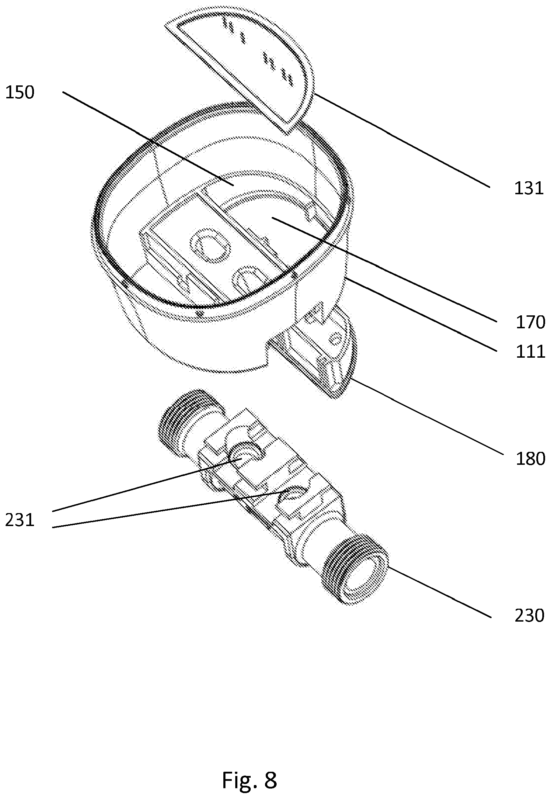

Referring to Figures 7 and 8, explosive views of the flow meter 400 according to the invention is shown in two different perspectives. With none of these figures the lid 220 of the flow meter housing 300 is shown.

Both figures show perspective views of the first cup structure 111, the second cup structure 131, the third cup structure 180 and the flow tube 230.

With Figure 7 is shown that the second cup structure 131 comprises the hermetically sealed electrical feedthrough 140 made up of 7 individually insulated electrical pins.

With Figure 8 is shown that the first cup structure 111 has the first cup opening 150 for receiving the second cup structure 131 from above, and the second cup opening 170 for receiving the third cup structure 180 from below.

Further with figure 8 is shown that the flow tube 230 has holes 231 for receiving the transducers 121a, 121b (not shown) of the flow meter housing 300 for ease of transmission and reception of ultrasonic signals across the fluid phase.

## Claims

1. A flow meter (400) arranged to measure a flow rate of a fluid (240) flowing through a flow tube (230), wherein the flow meter (400) comprises:
- the flow tube (230), and
- an ultrasonic flow meter housing (300),
the flow meter housing (300) comprising:
- a flow meter cup (100), and
- a lid (220),
the flow meter cup (100) comprising:
- a first cup section (110) comprising:
- a first cup cavity (120) arranged for accommodating:
- two ultrasonic transducers (121a, 121b) for emitting and receiving ultrasonic signals, and
- an electronic circuit (122) for operating the transducers (121a, 121b), and
- a second cup section (130), and
an opening (210),
wherein the ultrasonic flow meter housing (300) is mounted onto the flow tube (230) so as to allow ultrasonic signals from said transducers (121a, 121b) to pass across the fluid (240) flowing through the flow tube (230),
wherein the second cup section (130) comprises a hermetically sealed electrical feedthrough (140), wherein the hermetically sealed electrical feedthrough (140) is a metallic feedthrough,
wherein the first cup section (110) comprises a first cup structure (111) comprising the first cup cavity (120) and a first cup opening (150), and the second cup section (130) comprises a second cup structure (131) which is arranged in the first cup opening (150), so as to provide a first closed connection between the first cup structure (111) and the second cup structure (131), wherein a first sealing means hermetically seals the first closed connection,
wherein the lid (220) is arranged in the opening (210) of the first cup structure (111), so as to provide a closed connection between the first cup structure (111) and the lid (220), and wherein a sealing means hermetically seals the closed connection.

2. The flow meter (400) according to claim 1, wherein the first sealing means comprises ultrasonic welding.

3. The flow meter (400) according to claim any of claims 1-2, wherein the first and second cup structures (111, 131) are made from polyphenylene sulfide.

4. The flow meter (400) according to any of claims 1-3, wherein the first cup structure (111) further comprises:
- a second cup cavity (160) adjacent to the first cup opening (150), and
- a second cup opening (170),
wherein the second cup structure (131) forms a shared wall between the first cup cavity (120) and the second cup cavity (160), and
wherein the second cup cavity (160) is arranged for receiving a first electrical connector (190) through the second cup opening (170).

5. The flow meter (400) according to claim 4, wherein the flow meter cup (100) further comprises a third cup structure (180) arranged in the second cup opening (170) of the first cup structure (111), so as to provide a second closed connection between the first cup structure (111) and the third cup structure (180).

6. The flow meter (400) according to claim 5, wherein the third cup structure (180) is arranged to accommodate a second electrical connector (200) arranged for receiving the first electrical connector (190) and for connecting to the hermetically sealed electrical feedthrough (140).

7. The flow meter (400) according to claim 6, wherein the third cup structure (180) is arranged to accommodate retention means for retaining the first electrical connector (190) in the second cup cavity (160).

8. The flow meter (400) according to claim 7, wherein the retention means comprises a printed circuit board.

9. The flow meter (400) according to any of claims 1-8, wherein the hermetically sealed electrical feedthrough (140) is a flexible feedthrough.

10. The flow meter (400) according to any of the preceding claims, wherein the hermetically sealed electrical feedthrough (140) is applied to the second cup section (130) by insert molding.

11. The flow meter (400) according to any of claims 1-10, wherein the hermetically sealed electrical feedthrough (140) is applied to the second cup section (130) by ultrasound insertion.

12. The flow meter according to any of the preceding claims, wherein the flow meter (400) is a water meter, a heat meter, or a cooling meter.

13. The flow meter (400) according to claim 12, wherein the flow meter (400) is a heat meter, or a cooling meter, and wherein the hermetically sealed electrical feedthrough (140) is arranged to carry electrical signals relating to the temperature of the fluid (240).

## Patentansprüche

1. Durchflussmesser (400), der angeordnet ist, um eine Durchflussmenge eines Fluids (240) zu messen, das durch ein Durchflussrohr (230) fließt, wobei der Durchflussmesser (400) umfasst:
- das Durchflussrohr (230), und
- ein Ultraschalldurchflussmessergehäuse (300),
das Durchflussmessergehäuse (300) umfassend:
- einen Durchflussmesserbecher (100), und
- einen Deckel (220),
der Durchflussmesserbecher (100) umfassend:
- einen ersten Becherabschnitt (110), umfassend:
- einen ersten Becherhohlraum (120), der angeordnet ist zum Aufnehmen von:
- zwei Ultraschallwandlern (121a, 121b) zum Emittieren und Empfangen von Ultraschallsignalen, und
- einer elektronischen Schaltung (122) zum Betreiben der Wandler (121a, 121b), und
- einen zweiten Becherabschnitt (130), und
eine Öffnung (210),
wobei das Ultraschalldurchflussmessergehäuse (300) auf dem Durchflussrohr (230) montiert ist, um zu ermöglichen, dass Ultraschallsignale von den Wandlern (121a, 121b) über das Fluid (240) verlaufen, das durch das Durchflussrohr (230) fließt,
wobei der zweite Becherabschnitt (130) eine hermetisch abgedichtete elektrische Durchführung (140) umfasst, wobei die hermetisch abgedichtete elektrische Durchführung (140) eine metallische Durchführung ist,
wobei der erste Becherabschnitt (110) eine erste Becherstruktur (111) umfasst, umfassend den ersten Becherhohlraum (120) und eine erste Becheröffnung (150), und der zweite Becherabschnitt (130) eine zweite Becherstruktur (131) umfasst, die in der ersten Becheröffnung (150) angeordnet ist, um eine erste geschlossene Verbindung zwischen der ersten Becherstruktur (111) und der zweiten Becherstruktur (131) bereitzustellen, wobei ein erstes Dichtmittel die erste geschlossene Verbindung hermetisch abdichtet,
wobei der Deckel (220) in der Öffnung (210) der ersten Becherstruktur (111) angeordnet ist, um eine geschlossene Verbindung zwischen der ersten Becherstruktur (111) und dem Deckel (220) bereitzustellen, und wobei ein Dichtmittel die geschlossene Verbindung hermetisch abdichtet.

2. Durchflussmesser (400) nach Anspruch 1, wobei das erste Dichtmittel Ultraschallschweißen umfasst.

3. Durchflussmesser (400) nach Anspruch 1 bis 2, wobei die erste und die zweite Becherstruktur (111, 131) aus Polyphenylensulfid hergestellt sind.

4. Durchflussmesser (400) nach einem der Ansprüche 1 bis 3, wobei die erste Becherstruktur (111) ferner umfasst:
- einen zweiten Becherhohlraum (160) angrenzend an die erste Becheröffnung (150), und
- eine zweite Becheröffnung (170),
wobei die zweite Becherstruktur (131) eine gemeinsame Wand zwischen dem ersten Becherhohlraum (120) und dem zweiten Becherhohlraum (160) ausbildet, und
wobei der zweite Becherhohlraum (160) zum Empfangen eines ersten elektrischen Verbinders (190) durch die zweite Behälteröffnung (170) angeordnet ist.

5. Durchflussmesser (400) nach Anspruch 4, wobei der Durchflussmesserbecher (100) ferner eine dritte Becherstruktur (180) umfasst, die in der zweiten Behälteröffnung (170) der ersten Becherstruktur (111) angeordnet ist, um eine zweite geschlossene Verbindung zwischen der ersten Becherstruktur (111) und der dritten Becherstruktur (180) bereitzustellen.

6. Durchflussmesser (400) nach Anspruch 5, wobei die dritte Becherstruktur (180) angeordnet ist, um einen zweiten elektrischen Verbinder (200) aufzunehmen, der zum Empfangen des ersten elektrischen Verbinders (190) und zum Verbinden mit der hermetisch abgedichteten elektrischen Durchführung (140) angeordnet ist.

7. Durchflussmesser (400) nach Anspruch 6, wobei die dritte Becherstruktur (180) angeordnet ist, um Haltemittel zum Halten des ersten elektrischen Verbinders (190) in dem zweiten Becherhohlraum (160) aufzunehmen.

8. Durchflussmesser (400) nach Anspruch 7, wobei das Haltemittel eine Leiterplatte umfasst.

9. Durchflussmesser (400) nach einem der Ansprüche 1 bis 8, wobei die hermetisch abgedichtete elektrische Durchführung (140) eine flexible Durchführung ist.

10. Durchflussmesser (400) nach einem der vorstehenden Ansprüche, wobei die hermetisch abgedichtete elektrische Durchführung (140) durch Umspritzen auf den zweiten Becherabschnitt (130) aufgebracht wird.

11. Durchflussmesser (400) nach einem der Ansprüche 1 bis 10, wobei die hermetisch abgedichtete elektrische Durchführung (140) durch Ultraschalleinführung auf den zweiten Becherabschnitt (130) aufgebracht wird.

12. Durchflussmesser nach einem der vorstehenden Ansprüche, wobei der Durchflussmesser (400) ein Wasserzähler, ein Wärmezähler oder ein Kältezähler ist.

13. Durchflussmesser (400) nach Anspruch 12, wobei der Durchflussmesser (400) ein Wärmezähler oder ein Kältezähler ist und wobei die hermetisch abgedichtete elektrische Durchführung (140) angeordnet ist, um elektrische Signale zu tragen, die sich auf die Temperatur des Fluids (240) beziehen.

## Revendications

1. Débitmètre (400) agencé pour la mesure d'un débit d'un fluide (240) s'écoulant à travers un tube d'écoulement (230), dans lequel le débitmètre (400) comprend :
- le tube d'écoulement (230), et
- un boîtier de débitmètre à ultrasons (300),
le boîtier de débitmètre (300) comprenant :
- un bol débitmètre (100), et
- un couvercle (220),
le bol débitmètre (100) comprenant :
- une première section de bol (110) comprenant :
- une première cavité de bol (120) agencée pour l'accueil de :
- deux transducteurs à ultrasons (121a, 121b) destinés à émettre et recevoir des signaux à ultrasons, et
- un circuit électronique (122) destiné à faire fonctionner les transducteurs (121a, 121b), et
- une seconde section de bol (130), et
une ouverture (210),
dans lequel le boîtier de débitmètre à ultrasons (300) est monté sur le tube d'écoulement (230) de manière à permettre à des signaux à ultrasons provenant desdits transducteurs (121a, 121b) de passer à travers le fluide (240) s'écoulant à travers le tube d'écoulement (230),
dans lequel la seconde section de bol (130) comprend une traversée électrique hermétiquement scellée (140), dans lequel la traversée électrique hermétiquement scellée (140) est une traversée métallique,
dans lequel la première section de bol (110) comprend une première structure de bol (111) comprenant la première cavité de bol (120) et une première ouverture de bol (150), et la seconde section de bol (130) comprend une deuxième structure de bol (131) qui est agencée dans la première ouverture de bol (150), de manière à fournir une première connexion fermée entre la première structure de bol (111) et la deuxième structure de bol (131), dans lequel un premier moyen d'étanchéité scelle hermétiquement la première connexion fermée,
dans lequel le couvercle (220) est agencé dans l'ouverture (210) de la première structure de bol (111), de manière à fournir une connexion fermée entre la première structure de bol (111) et le couvercle (220), et dans lequel un moyen d'étanchéité scelle hermétiquement la connexion fermée.

2. Débitmètre (400) selon la revendication 1, dans lequel le premier moyen d'étanchéité comprend un soudage par ultrasons.

3. Débitmètre (400) selon la revendication 1 ou 2, dans lequel les première et deuxième structures de bol (111, 131) sont fabriquées à partir de sulfure de polyphénylène.

4. Débitmètre (400) selon l'une quelconque des revendications 1 à 3, dans lequel la première structure de bol (111) comprend en outre :
- une seconde cavité de bol (160) adjacente à la première ouverture de bol (150), et
- une seconde ouverture de bol (170),
dans lequel la deuxième structure de bol (131) forme une paroi partagée entre la première cavité de bol (120) et la seconde cavité de bol (160), et
dans lequel la seconde cavité de bol (160) est agencée pour la réception d'un premier connecteur électrique (190) à travers la seconde ouverture de bol (170).

5. Débitmètre (400) selon la revendication 4, dans lequel le bol de débitmètre (100) comprend en outre une troisième structure de bol (180) agencée dans la seconde ouverture de bol (170) de la première structure de bol (111), de manière à fournir une seconde connexion fermée entre la première structure de bol (111) et la troisième structure de bol (180).

6. Débitmètre (400) selon la revendication 5, dans lequel la troisième structure de bol (180) est agencée pour l'accueil d'un second connecteur électrique (200) agencé pour la réception du premier connecteur électrique (190) et pour la connexion à la traversée électrique hermétiquement scellée (140).

7. Débitmètre (400) selon la revendication 6, dans lequel la troisième structure de bol (180) est agencée pour l'accueil d'un moyen de retenue destiné à retenir le premier connecteur électrique (190) dans la seconde cavité de bol (160).

8. Débitmètre (400) selon la revendication 7, dans lequel le moyen de retenue comprend une carte de circuit imprimé.

9. Débitmètre (400) selon l'une quelconque des revendications 1 à 8, dans lequel la traversée électrique hermétiquement scellée (140) est une traversée flexible.

10. Débitmètre (400) selon l'une quelconque des revendications précédentes, dans lequel la traversée électrique hermétiquement scellée (140) est appliquée à la seconde section de bol (130) par moulage par insertion.

11. Débitmètre (400) selon l'une quelconque des revendications 1 à 10, dans lequel la traversée électrique hermétiquement scellée (140) est appliquée à la seconde section de bol (130) par insertion à ultrasons.

12. Débitmètre selon l'une quelconque des revendications précédentes, dans lequel le débitmètre (400) est un compteur d'eau, un compteur de chaleur, ou un compteur de refroidissement.

13. Débitmètre (400) selon la revendication 12, dans lequel le débitmètre (400) est un compteur de chaleur, ou un compteur de refroidissement, et dans lequel la traversée électrique hermétiquement scellée (140) est agencée pour le transport de signaux électriques relatifs à la température du fluide (240).
